# EUROPÄISCHE PATENTSCHRIFT

(11) **EP 4 526 572 B1**
(45) Veröffentlichungstag und Bekanntmachung des Hinweises auf die Patenterteilung: **13.08.2025**
(21) Anmeldenummer: 23716455.3
(22) Anmeldetag: 30.03.2023
(51) Int. Cl.: F16B 12/20

(54) **BESCHLAGTEIL EINES VERBINDUNGSBESCHLAGS SOWIE VERBINDUNGSBESCHLAG UND ZUGEHÖRIGE ANORDNUNG**
FITTING PART OF A CONNECTION FITTING, AND CONNECTION FITTING AND ASSOCIATED ARRANGEMENT
PARTIE DE RACCORD D'UN RACCORD DE LIAISON ET RACCORD DE LIAISON ET AGENCEMENT ASSOCIÉ

(30) Priorität: 31.05.2022 DE 202022103053 U
(43) Veröffentlichungstag der Anmeldung: 26.03.2025
(73) Patentinhaber: Häfele Berlin GmbH & Co KG, 12307 Berlin (DE)
(72) Erfinder: MERZ, Urlich, 93059 Regensburg (DE)
(74) Vertreter: Kohler Schmid Möbus Patentanwälte
(86) Internationale Anmeldenummer: PCT/EP2023/058288
(87) Internationale Veröffentlichungsnummer: WO 2023/232316

(56) Entgegenhaltungen:
- DE-U1- 20 208 021
- JP-A- 2000 170 421
- US-A- 3 565 469

## Beschreibung

Die Erfindung betrifft ein Beschlagteil eines Verbindungsbeschlags zur Verbindung zweier Komponenten, insbesondere Möbelplatten wie z.B. Konstruktionsböden in Schränken, Regalen und dergleichen, sowie einen zugehörigen Verbindungsbeschlag und eine zugehörige Anordnung mit zwei miteinander verbundenen Komponenten.

Solche Verbindungsbeschläge sind hinreichend bekannt. Üblicherweise besteht ein Verbindungsbeschlag aus zwei Beschlagteilen, von denen einer an der zu verbindenden Komponente befestigt wird und von der Komponente absteht. Dieses abstehende Beschlagteil kann beim weiteren Handling von der Komponente abbrechen und verhindert daher die Lagerung und Auslieferung von Komponenten mit vormontierten Beschlagteilen.

Aus DE 202 08 021 U1 ist ein Beschlagteil eines Verbindungsbeschlags mit einem plattenförmigen Zughaken bekannt. Der Zughaken weist, jeweils im mittleren Bereich zwischen seinem oberen und unteren Plattenende, auf seiner einen Plattenseite einen Sperrzapfen, welcher in einer gehäuseseitigen Kulissenführung zwangsgeführt ist, und auf seiner anderen Plattenseite einen Mitnehmerzapfen auf, der in eine spiralförmige Stellnut einer Mitnehmerscheibe eingreift. Der Sperrzapfen und der Mitnehmerzapfen sind gegeneinander sowohl in Drehrichtung als auch in Radialrichtung versetzt angeordnet. Der Zughaken ist zudem mit einem Langloch auf einer Steckachse drehbar und verschiebbar gelagert.

Demgegenüber ist es die Aufgabe der vorliegenden Erfindung, einen neuartigen Verbindungsbeschlag anzugeben, der insbesondere die Lagerung, Auslieferung und Montage von Komponenten, insbesondere von Konstruktionsböden, mit vormontierten Beschlagteilen ermöglicht und zudem möglichst nicht sichtbar ist.

Konstruktionsböden sind Zwischenböden in Schrank- und Korpusmöbeln, welche im Gegensatz zu Tablarböden die Aufgabe übernehmen, das Möbel konstruktiv zu unterstützen, indem sie mit den Seitenwänden fest montiert sind. Dies ist insbesondere bei höheren Schränken oder Regalen von Vorteil, da ein Ausbauchen der Seiten verhindert wird. Für die Befestigung von Konstruktionsböden gibt es eine Reihe von bekannten Systemen, welche entweder eine angeschnittene Flächenbohrung benötigen oder in eine Kantenbohrung bzw. Fräsung eingesetzt werden. Mit der Erfindung sollen Probleme, die sich bei der Montage von Konstruktionsböden ergeben, behoben werden. Diese sind zum einen die Sichtbarkeit der Verbindungsbeschläge im Falle einer Flächenbohrungsmontage, zum anderen die Notwendigkeit, Einschraubbolzen und dergleichen in die Seiten einzuschrauben.

Diese Aufgabe wird erfindungsgemäß durch ein Beschlagteil eines Verbindungsbeschlags zur Verbindung zweier Komponenten gelöst, aufweisend:
- ein Gehäuse mit einer Gehäusevorderseite und mit einer Kulissenführung in Form zweier gegeneinander in einem spitzen Winkel abgewinkelter Führungsschlitze, deren Scheitelpunkt der Gehäusevorderseite zugewandt ist,
- eine Zug- und Schubstange mit einem hinteren Stangenende, das in der Kulissenführung geführt ist, um die Schubstange aus einer zurückgezogenen ersten Endstellung über eine ausgefahrene Zwischenstellung in eine zurückgezogene zweite Endstellung zu bewegen und umgekehrt, und mit einem vorderen Stangenende, das eine dem hinteren Stangenende zugewandte Rückseite aufweist und in der zweiten Endstellung nach vorne über die Gehäusevorderseite weniger weit als in der Zwischenstellung vorsteht, und
- ein im Gehäuse drehbar gelagertes Steuer- oder Anzugselement mit einem sich in Drehrichtung erstreckenden, exzentrischen Steuer- oder Anzugsschlitz, in den das hintere Stangenende eingreift, um die Schubstange durch Drehen des Anzugselements in einer Drehrichtung von der ersten in die zweite Endstellung und durch Drehen in der entgegengesetzten Drehrichtung von der zweiten in die erste Endstellung zu bewegen.

Erfindungsgemäß wird die Schubstange durch Drehen des Anzugselements zunächst aus dem Gehäuse ausgefahren und durch Weiterdrehen des Anzugselements wieder in das Gehäuse eingefahren, um dabei einen Hinterschnitt an einem zweiten Beschlagteil zu hintergreifen.

Bevorzugt steht in der ersten Endstellung der Schubstange das vordere Stangenende nicht nach vorne über die Gehäusevorderseite vor, was eine risikolose Vormontage des Beschlagteils an einer Komponente ermöglicht.

Vorzugsweise ist der zweite Führungsschlitz parallel zur Längsachse des Gehäuses oder in einem vorbestimmten Winkel zur Gehäusevorderseite, insbesondere rechtwinklig, ausgerichtet, um so die Schubstange in der zweiten Endstellung parallel zur Längsachse des Gehäuses oder in einem vorbestimmten Winkel zur Gehäusevorderseite, insbesondere rechtwinklig, auszurichten.

Der Anzugsschlitz kann beidseitig geschlossen oder, was bevorzugt ist, an seinem radial äußeren Ende offen sein.

Besonders bevorzugt weist das Gehäuse zwei Anschläge auf, zwischen denen die Schubstange angeordnet ist. Die beiden Anschläge fungieren als Drehlager, an denen die Schubstange in der zweiten Endstellung parallel zur Längsachse des Gehäuses oder in einem vorbestimmten Winkel zur Gehäusevorderseite, insbesondere rechtwinklig, ausgerichtet wird.

Vorteilhaft ist das Gehäuse aus zwei Gehäusehälften zusammengesetzt, von welchen mindestens eine die Kulissenführung aufweist.

Vorzugsweise weist das Anzugselement eine Betätigungskontur, z.B. in Form eines Kreuzschlitzes oder eines Innensechskants, zum Verdrehen des Anzugselements auf. Erforderlichenfalls hat das Gehäuse eine Zugangsöffnung, durch die hindurch die Betätigungskontur für eine Drehbetätigung zugänglich ist.

Vorteilhaft weist das erste Beschlagteil Umfangsrippen auf, um das erste Beschlagteil in einer Bohrung zu verankern.

Die Erfindung betrifft auch einen Verbindungsbeschlag mit einem wie oben ausgebildeten ersten Beschlagteil und mit einem zweiten Beschlagteil, welches an seiner Vorderseite eine Einführöffnung für das vordere Stangenende der Schubstange und innerhalb der Einführöffnung einen mit der Rückseite des vorderen Schubstangenendes zusammenwirkenden Hinterschnitt aufweist.

Vorzugsweise weisen das erste und das zweite Beschlagteil Zentrierungsmittel, wie z.B. einen Zentrierungsvorsprung und eine Zentrierungsöffnung, auf, mittels denen die beiden Beschlagteile, wenn sie mit ihren Vorderseiten aneinander anliegen, zueinander zentriert sind.

Vorteilhaft weist das zweite Beschlagteil Umfangsrippen auf, um das zweite Beschlagteil in einer Bohrung zu verankern.

Prinzipiell kann der von der Schubstange hintergreifbare Hinterschnitt auch direkt an der zweiten Komponente ausgebildet sein, so dass in diesem Fall kein separates zweites Beschlagteil erforderlich ist.

Die Erfindung betrifft auch noch eine Anordnung mit zwei Komponenten, die mittels des oben beschriebenen Verbindungsbeschlags miteinander verbunden sind, wobei das erste Beschlagteil an der einen Komponente und das zweite Beschlagteil an der anderen Komponente befestigt sind und wobei die Schubstange des ersten Beschlagteils mit ihrem vorderen Stangenende den Hinterschnitt des zweiten Beschlagteils hintergreift, wodurch die beiden Komponenten miteinander verspannt sind.

Durch eine gegenläufige Drehbewegung des Anzugselements können die beiden Komponenten demontiert werden.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: einen erfindungsgemäßen Verbindungsbeschlag mit zwei Beschlagteilen zur Verbindung zweier Komponenten in einer perspektivischen Ansicht der beiden miteinander verrasteten Beschlagteile (Fig. 1a) und in zwei unterschiedlichen Explosionsansichten (Fign. 1 b, 1c);
- Fig. 2: eine Gehäusehälfte eines der beiden Beschlagteile; und
- Fign. 3a-3e: die Funktionsweise des erfindungsgemäßen Verbindungsbeschlags.

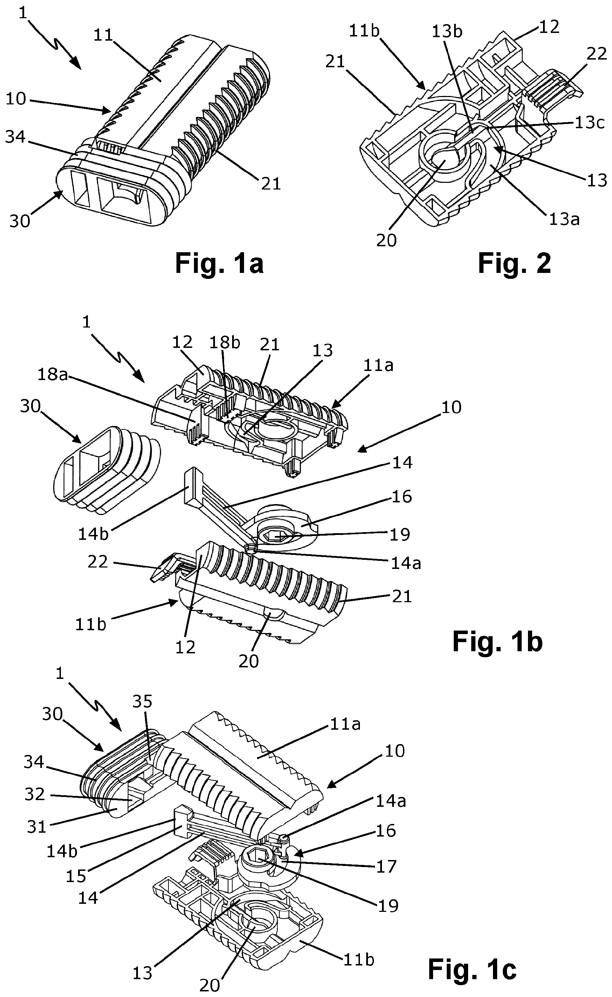

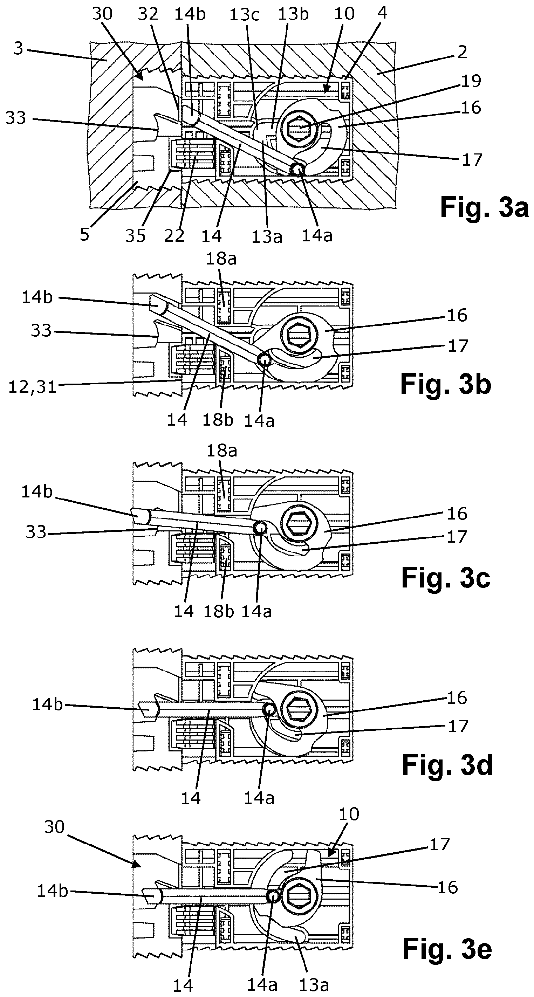

Der in **Fign. 1a-1c** gezeigte Verbindungsbeschlag **1** dient zur Verbindung zweier Komponenten **2, 3** (Fig. 3a), hier lediglich bespielhaft in Form zweier Möbelplatten, und umfasst ein erstes Beschlagteil **10,** welches in einer Bohrung **4** der einen, ersten Möbelplatte 2 verankert ist, und ein zweites Beschlagteil **30,** welches in einer Bohrung **5** der anderen, zweiten Möbelplatte 3 verankert ist.

Das erste Beschlagteil 10 weist folgende Einzelteile auf:
- ein Gehäuse **11** mit einer Gehäusevorderseite **12** und mit einer Kulissenführung **13** in Form zweier gegeneinander in einem spitzen Winkel abgewinkelter Führungsschlitze (hier in Form von Führungsnuten) **13a, 13b** (Fig. 2), deren Scheitelpunkt **13c** der Gehäusevorderseite 12 zugewandt ist,
- eine Zug- und Schubstange **14** mit einem hier zapfenförmigen, hinteren Stangenende **14a,** das in der Kulissenführung 13 geführt ist, um die Schubstange 14 aus einer zurückgezogenen ersten Endstellung (Fig. 3a) über eine ausgefahrene Zwischenstellung (Fig. 3c) in eine zurückgezogene zweite Endstellung (Fig. 3e) zu bewegen und umgekehrt, und mit einem hier bolzenförmigen, vorderen Stangenende **14b,** das eine dem hinteren Stangenende 14a zugewandten Rückseite **15** aufweist, und
- ein im Gehäuse 11 drehbar gelagertes Steuer- oder Anzugselement **16** mit einem sich in Drehrichtung erstreckenden, exzentrischen Steuer- oder Anzugsschlitz **17,** in den das hintere Stangenende 14a eingreift, um die Schubstange 14 durch Drehen des Anzugselements 16 in der einen Drehrichtung von der ersten in die zweite Endstellung und in der entgegengesetzten anderen Drehrichtung von der zweiten zurück in die erste Endstellung zu bewegen.

Wie in **Fig.** 2 gezeigt, verläuft der erste Führungsschlitz 13a in einem ca. 90°-Bogen um die Drehachse des Anzugselements 16, und der zweite Führungsschlitz 13b ist in einem vorbestimmten Winkel, hier rechtwinklig, zur Gehäusevorderseite 12 ausgerichtet.

Wie im Ausführungsbeispiel gezeigt, kann optional der Anzugsschlitz 17 an seinem radial äußeren Ende endseitig offen sein und das Gehäuse 11 zwei Anschläge **18a, 18b** aufweisen, zwischen denen die Schubstange 14 angeordnet ist. Die beiden Anschläge 18a, 18b sind zu beiden Seiten derjenigen Geraden angeordnet, die durch den zweiten Führungsschlitz 13b definiert ist.

Das Gehäuse 11 kann optional aus zwei Gehäusehälften **11a, 11b** zusammengesetzt sein und das Anzugselement 16 eine Betätigungskontur **19** zum Verdrehen des Anzugselements 16 aufweisen. Erforderlichenfalls hat das Gehäuse 11 eine Zugangsöffnung **20,** durch die hindurch die Betätigungskontur 19 zugänglich ist.

Optional kann das Gehäuse 11 auch noch mehrere hintereinander geordnete, widerhakenähnliche Umfangsrippen **21** aufweisen.

Das zweite Beschlagteil 30, hier in Form eines Gehäuses, weist an seiner Vorderseite **31** eine Einführöffnung **32** für das vordere Stangenende 14b der Schubstange 14 und innerhalb der Einführöffnung 32 einen vom eingeführten vorderen Stangenende 14b hintergreifbaren Hinterschnitt 33 (Fign. 3b, 3c) auf. Optional kann das zweite Beschlagteil 30 auch noch mehrere hintereinander geordnete, widerhakenähnliche Umfangsrippen **34** aufweisen.

Optional können die beiden Beschlagteile 10, 30 an ihren Vorderseiten 12, 31 jeweils einen Zentriervorsprung **22** und eine Zentrieröffnung **35** aufweisen, mittels denen die beiden Beschlagteile 10, 30, wenn diese mit ihren Vorderseiten 12, 31 aneinander anliegen, zueinander zentriert sind.

Das Gehäuse 11 des ersten Beschlagteils 10 hat bevorzugt eine doppelzylindrische Form und wird in eine überlagerte Doppelbohrung 4 der ersten Möbelplatte 2 eingesetzt. Das zweite Beschlagteil 30 hat bevorzugt einen ovalen Querschnitt und wird in eine überlagerte Doppelbohrung 5 der zweiten Möbelplatte 3 eingesetzt.

Nachfolgend wird die Funktionsweise des Verbindungsbeschlags 1 beschrieben.

Wie in **Fig.** 3a gezeigt, sind das erste Beschlagteil 10 in die Bohrung 4 der ersten Möbelplatte 2 und das zweite Beschlagteil 30 in die Bohrung 5 der zweiten Möbelteils 3 jeweils bündig eingesetzt. Die beiden Möbelplatten 2, 3 werden mit den Vorderseiten 12, 31 ihrer Beschlagteile 10, 30 aneinander angelegt und zueinander ausgerichtet, bis der Zentriervorsprung 34 in die Zentrieröffnung 35 eingreift und vorzugsweise darin verrastet ist. Die Schubstange 14 befindet sich in ihrer zurückgezogenen ersten Endstellung, in der das vordere Stangenende 14b nicht nach vorne über die Gehäusevorderseite 12 vorsteht und in einem Winkel von ca. 60° zur Gehäusevorderseite 12 schräggestellt ist. In dieser ersten Endstellung ist das hintere Stangenende 14a einerseits im hinteren Ende des ersten Führungsschlitzes 13a angeordnet sowie andererseits, weil im Eingriff mit dem Anzugsschlitz 17, mit dem Anzugselement 16 bewegungsgekoppelt.

Durch Drehen des Anzugselements 16 im Uhrzeigersinn wird das hintere Stangenende 14a vom Anzugselement 16 mitgenommen und dabei im ersten Führungsschlitz 13a der Kulissenführung 13 zwangsgeführt, wodurch das vordere Stangenende 14b immer weiter nach vorne aus der Gehäusevorderseite 12 herausbewegt wird. Nach einer in Fig. 3b gezeigten ca. 45°-Drehung des Anzugselements 16 ist das hintere Stangenende 14a der weiterhin schräggestellten Schubstange 14 in die Einführöffnung 32 des zweiten Beschlagteils 30 eingetreten.

Nach einer in Fig. 3c gezeigten ca. 90°-Drehung des Anzugselements 16 im Uhrzeigersinn ist das im Anzugsschlitz 17 befindliche hintere Stangenende 14a vom Anzugselement 16 in der Kulissenführung 13 bis zum Scheitelpunkt 13c mitgenommen. Die Schubstange 14 befindet sich in ihrer maximal ausgefahrenen Zwischenstellung und ist an den beiden Anschlägen 18a, 18b, welche als Drehlager fungieren, gegen den Uhrzeigersinn gedreht und dadurch parallel zur Längsachse des Gehäuses 11 bzw. rechtwinklig zur Gehäusevorderseite 12 ausgerichtet. Durch diese Drehung der Schubstange 14 hintergreift das vordere Stangenende 14b den Hinterschnitt 33 des zweiten Beschlagteils 30.

Nach einer in Fig. 3d gezeigten ca. 135°-Drehung des Anzugselements 16 im Uhrzeigersinn ist das im Anzugsschlitz 17 befindliche hintere Stangenende 14a vom Anzugselement 16 in der Kulissenführung 13 in den zweiten Führungsschlitz 13b mitgenommen und dabei die Schubstange 14 durch die Exzentrizität des Anzugsschlitzes 17 radial nach innen und mit ihrem vorderen Stangenende 14b in Anlage an den Hinterschnitt 33 gezogen.

Nach einer in **Fig. 3e** gezeigten ca. 180°-Drehung des Anzugselements 16 im Uhrzeigersinn ist das im Anzugsschlitz 17 befindliche hintere Stangenende 14a vom Anzugselement 16 in der Kulissenführung 13 weiter bis an das hintere Ende des zweiten Führungsschlitzes 13b mitgenommen und dabei die Schubstange 14 durch die Exzentrizität des Anzugsschlitzes 17 weiter radial nach innen in die zurückgezogene zweite Endstellung gezogen, wodurch die beiden Beschlagteile 10, 30 und damit auch die beiden Möbelplatten 2, 3 miteinander verspannt sind. In der zweiten Endstellung steht die Schubstange 14 also nach vorne über die Gehäusevorderseite 12 weniger weit vor als in der Zwischenstellung.

Für eine Demontage der Möbelplatten 2, 3 wird das Anzugselement 16 in entgegengesetzter Drehrichtung gedreht und dadurch die Schubstange 14 aus der zurückgezogenen zweiten Endstellung über die ausgefahrene Zwischenstellung zurück in die zurückgezogene erste Endstellung bewegt. Bei der Bewegung von der ausgefahrenen Zwischenstellung in die zurückgezogene erste Endstellung wird die Schubstange 14 an den beiden Anschlägen 18a, 18b wieder schräggestellt.

## Patentansprüche

1. Beschlagteil (10) eines Verbindungsbeschlags (1) zur Verbindung zweier Komponenten (2, 3), insbesondere Möbelplatten, aufweisend:
- ein Gehäuse (11) mit einer Gehäusevorderseite (12) und mit einer Kulissenführung (13) in Form zweier gegeneinander in einem spitzen Winkel abgewinkelter Führungsschlitze (13a, 13b), deren Scheitelpunkt (13c) der Gehäusevorderseite (12) zugewandt ist,
- eine Schubstange (14) mit einem hinteren Stangenende (14a), das in der Kulissenführung (13) geführt ist, um die Schubstange (14) aus einer zurückgezogenen ersten Endstellung über eine ausgefahrene Zwischenstellung in eine zurückgezogene zweite Endstellung zu bewegen und umgekehrt, und mit einem vorderen Stangenende (14b), das eine dem hinteren Stangenende (14a) zugewandte Rückseite (15) aufweist und in der zweiten Endstellung nach vorne über die Gehäusevorderseite (12) weniger weit als in der Zwischenstellung vorsteht, und
- ein im Gehäuse (11) drehbar gelagertes Anzugselement (16) mit einem sich in Drehrichtung erstreckenden, exzentrischen Anzugsschlitz (17), in den das hintere Stangenende (14a) eingreift, um die Schubstange (14) durch Drehen des Anzugselements (16) in einer Drehrichtung von der ersten in die zweite Endstellung und durch Drehen in der entgegengesetzten Drehrichtung von der zweiten in die erste Endstellung zu bewegen.

2. Beschlagteil nach Anspruch 1, **dadurch gekennzeichnet, dass** das Gehäuse (11) aus zwei Gehäusehälften (11a, 11b) zusammengesetzt ist, die jeweils eine Kulissenführung (13) aufweist.

3. Beschlagteil nach einem der vorhergehenden Ansprüche, **dadurch gekennzeichnet, dass** in der ersten Endstellung der Schubstange (14) das vordere Stangenende (14b) nicht nach vorne über die Gehäusevorderseite (12) vorsteht.

4. Beschlagteil nach einem der vorhergehenden Ansprüche, **dadurch gekennzeichnet, dass** der zweite Führungsschlitz (13b) parallel zur Längsachse des Gehäuses (11) oder in einem vorbestimmten Winkel zur Gehäusevorderseite (12), insbesondere rechtwinklig, ausgerichtet ist.

5. Beschlagteil nach einem der vorhergehenden Ansprüche, **dadurch gekennzeichnet, dass** der Anzugsschlitz (17) an seinem radial äußeren Ende endseitig offen ist.

6. Beschlagteil nach einem der vorhergehenden Ansprüche, **dadurch gekennzeichnet, dass** das Gehäuse (11) zwei Anschläge (18a, 18b) aufweist, zwischen denen die Schubstange (14) angeordnet ist, und dass die Schubstange (14) in der zweiten Endstellung von den beiden Anschlägen (18a, 18b) parallel zur Längsachse des Gehäuses (11) oder in einem vorbestimmten Winkel zur Gehäusevorderseite (12), insbesondere rechtwinklig, ausgerichtet ist.

7. Beschlagteil nach einem der vorhergehenden Ansprüche, **dadurch gekennzeichnet, dass** das Gehäuse (11) aus zwei Gehäusehälften (11a, 11b) zusammengesetzt ist.

8. Beschlagteil nach einem der vorhergehenden Ansprüche, **dadurch gekennzeichnet, dass** das Anzugselement (16) eine Betätigungskontur (19) zum Verdrehen des Anzugselements (16) aufweist.

9. Beschlagteil nach Anspruch 8, **dadurch gekennzeichnet, dass** das Gehäuse (11) eine Zugangsöffnung (20) für die Betätigungskontur (19) aufweist.

10. Beschlagteil nach einem der vorhergehenden Ansprüche, **dadurch gekennzeichnet, dass** das Gehäuse (11) Umfangsrippen (21) aufweist.

11. Verbindungsbeschlag (1) mit einem ersten Beschlagteil (10) nach einem der vorhergehenden Ansprüche und mit einem zweiten Beschlagteil (30), welches an seiner Vorderseite (31) eine Einführöffnung (32) für das vordere Stangenende (14b) der Schubstange (14) und innerhalb der Einführöffnung (32) einen mit der Rückseite (15) des vorderen Stangenendes (14b) zusammenwirkenden Hinterschnitt (33) aufweist.

12. Verbindungsbeschlag nach Anspruch 11, **dadurch gekennzeichnet, dass** das erste und das zweite Beschlagteil (10, 30) Zentrierungsmittel (22, 35) zum gegenseitigen Zentrieren aufweisen.

13. Verbindungsbeschlag nach Anspruch 11 oder 12, **dadurch gekennzeichnet, dass** das zweite Beschlagteil (30) Umfangsrippen (34) aufweist.

14. Anordnung mit zwei Komponenten (2, 3), die mittels eines Verbindungsbeschlags (1) nach einem der Ansprüche 11 bis 13 miteinander verbunden sind, wobei das erste Beschlagteil (10) an der einen Komponente (2) und das zweite Beschlagteil (30) an der anderen Komponente (3) befestigt sind und wobei die Schubstange (14) des ersten Beschlagteils (10) mit ihrem vorderen Stangenende (14b) den Hinterschnitt (33) des zweiten Beschlagteils (20) hintergreift, wodurch die beiden Komponenten (2, 3) miteinander verspannt sind.

## Claims

1. Fitting part (10) of a connecting fitting (1) for connecting two components (2, 3), in particular furniture panels, comprising:
- a housing (11) with a front side (12) of the housing and with a slotted guide (13) in the form of two guide slots (13a, 13b) angled towards each other at an acute angle, the apex (13c) of which faces the front side (12) of the housing,
- a push rod (14) with a rear rod end (14a) which is guided in the slotted guide (13) to move the push rod (14) from a retracted first end position via an extended intermediate position to a retracted second end position and vice versa, and with a front rod end (14b) which has a rear side (15) facing the rear rod end (14a) and, in the second end position, projects forward beyond the front side (12) of the housing less far than in the intermediate position, and
- a tightening element (16) rotatably mounted in the housing (11) with an eccentric tightening slot (17) extending in the direction of rotation, into which the rear rod end (14a) engages in order to move the push rod (14) by rotating the tightening element (16) in one direction of rotation from the first end position to the second end position and by rotating it in the opposite direction of rotation from the second end position to the first end position.

2. Fitting part according to claim 1, **characterized in that** the housing (11) is composed of two housing halves (11a, 11b), each of which has a slotted guide (13).

3. Fitting part according to one of the preceding claims, **characterized in that** in the first end position of the push rod (14), the front rod end (14b) does not project forward beyond the front side (12) of the housing.

4. Fitting part according to one of the preceding claims, **characterized in that** the second guide slot (13b) is aligned parallel to the longitudinal axis of the housing (11) or at a predetermined angle with respect to the front side (12) of the housing, in particular at right angles.

5. Fitting part according to one of the preceding claims, **characterized in that** the tightening slot (17) is open at its radially outer end.

6. Fitting part according to one of the preceding claims, **characterized in that** the housing (11) has two stops (18a, 18b) between which the push rod (14) is arranged, and that the push rod (14) in the second end position is aligned by the two stops (18a, 18b) parallel to the longitudinal axis of the housing (11) or at a predetermined angle relative to the front side (12) of the housing, in particular at right angles.

7. Fitting part according to one of the preceding claims, **characterized in that** the housing (11) is composed of two housing halves (11a, 11b).

8. Fitting part according to one of the preceding claims, **characterized in that** the tightening element (16) has an actuation contour (19) for rotating the tightening element (16).

9. Fitting part according to claim 8, **characterized in that** the housing (11) comprises an access opening (20) for the actuation contour (19).

10. Fitting part according to one of the preceding claims, **characterized in that** the housing (11) has circumferential ribs (21).

11. Connecting fitting (1) with a first fitting part (10) according to one of the preceding claims and with a second fitting part (30) which has on its front side (31) an insertion opening (32) for the front rod end (14b) of the push rod (14) and, inside the insertion opening (32) has an undercut (33) which cooperates with the rear side (15) of the front rod end (14b).

12. Connecting fitting according to claim 11, **characterized in that** the first and the second fitting part (10, 30) have centering means (22, 35) for mutual centering.

13. Connecting fitting according to claim 11 or 12, **characterized in that** the second fitting part (30) has circumferential ribs (34).

14. Arrangement with two components (2, 3) which are connected to one another by means of a connecting fitting (1) according to one of claims 11 to 13, wherein the first fitting part (10) is fastened to one component (2) and the second fitting part (30) is fastened to the other component (3), and wherein the push rod (14) of the first fitting part (10) engages with its front rod end (14b) behind the undercut (33) of the second fitting part (20), thereby bracing the two components (2, 3) together.

## Revendications

1. Pièce d'armature (10) d'une ferrure d'assemblage (1) conçue pour relier deux éléments structurels (2, 3), en particulier des panneaux de meubles, comprenant :
- un boîtier (11) muni d'une face antérieure (12) et d'un guide de coulissement (13) revêtant la forme de deux fentes de guidage (13a, 13b) qui sont coudées l'une par rapport à l'autre en décrivant un angle aigu et dont le point sommital (13c) est tourné vers ladite face antérieure (12) du boîtier,
- une tige de poussée (14) comportant une extrémité postérieure (14a) guidée dans ledit guide de coulissement (13) en vue de mouvoir ladite tige de poussée (14) à partir d'une première position extrême rétractée, vers une seconde position extrême rétractée, et inversement, en transitant par une position intermédiaire déployée, et une extrémité antérieure (14b) qui présente une face postérieure (15) pointant vers ladite extrémité postérieure (14a) de la tige et qui dépasse vers l'avant au-delà de ladite face antérieure (12) du boîtier, dans la seconde position extrême, d'une distance moindre que dans la position intermédiaire, et
- un élément de serrage (16) monté à rotation dans le boîtier (11), pourvu d'une fente excentrée de serrage (17) s'étendant dans le sens de rotation, et dans laquelle l'extrémité postérieure (14a) de la tige pénètre afin de mouvoir ladite tige de poussée (14) de la première position extrême à la seconde, suite à une rotation dudit élément de serrage (16) dans un sens de rotation, et de la seconde position extrême à la première suite à une rotation dans le sens de rotation opposé.

2. Pièce d'armature selon la revendication 1, **caractérisée par le fait que** le boitier (11) est composé de deux moitiés (11a, 11b) respectivement munies d'un guide de coulissement (13).

3. Pièce d'armature selon l'une des revendications précédentes, **caractérisée par le fait que**, dans la première position extrême de la tige de poussée (14), l'extrémité antérieure (14b) de ladite tige ne fait pas saillie, vers l'avant, au-delà de la face antérieure (12) du boîtier.

4. Pièce d'armature selon l'une des revendications précédentes, **caractérisée par le fait que** la seconde fente de guidage (13b) est orientée parallèlement à l'axe longitudinal du boîtier (11) ou en décrivant un angle prédéterminé, en particulier un angle droit par rapport à la face antérieure (12) dudit boîtier.

5. Pièce d'armature selon l'une des revendications précédentes, **caractérisée par le fait que** la fente de serrage (17) présente une ouverture extrême au niveau de son extrémité radialement extérieure.

6. Pièce d'armature selon l'une des revendications précédentes, **caractérisée par le fait que** le boîtier (11) est nanti de deux butées (18a, 18b) entre lesquelles la tige de poussée (14) est interposée ; et **par le fait que** ladite tige de poussée (14) est orientée par les deux butées (18a, 18b), dans la seconde position extrême, parallèlement à l'axe longitudinal du boîtier (11) ou en décrivant un angle prédéterminé, en particulier un angle droit par rapport à la face antérieure (12) dudit boîtier.

7. Pièce d'armature selon l'une des revendications précédentes, **caractérisée par le fait que** le boîtier (11) est composé de deux moitiés (11a, 11b).

8. Pièce d'armature selon l'une des revendications précédentes, **caractérisée par le fait que** l'élément de serrage (16) est doté d'un profil d'actionnement (19) dévolu à une mise en rotation dudit élément de serrage (16).

9. Pièce d'armature selon la revendication 8, **caractérisée par le fait que** le boîtier (11) comporte une ouverture d'accès (20) dédiée au profil d'actionnement (19).

10. Pièce d'armature selon l'une des revendications précédentes, **caractérisée par le fait que** le boîtier (11) est muni de striures périphériques (21).

11. Ferrure d'assemblage (1) pourvue d'une première pièce d'armature (10), conforme à l'une des revendications précédentes, et d'une seconde pièce d'armature (30) qui comporte, au niveau de sa face antérieure (31), un orifice d'insertion (32) affecté à l'extrémité antérieure (14b) de la tige de poussé (14) et, à l'intérieur dudit orifice d'insertion (32), une contre-dépouille (33) coopérant avec la face postérieure (15) de ladite extrémité antérieure (14b) de la tige.

12. Ferrure d'assemblage selon la revendication 11, **caractérisée par le fait que** les première et seconde pièces d'armature (10, 30) sont munies de moyens de centrage (22, 35) dévolus au centrage réciproque.

13. Ferrure d'assemblage selon la revendication 11 ou 12, **caractérisée par le fait que** la seconde pièce d'armature (30) est dotée de striures périphériques (34).

14. Agencement comptant deux éléments structurels (2, 3) reliés l'un à l'autre au moyen d'une ferrure d'assemblage (1) conforme à l'une des revendications 11 à 13, sachant que la première pièce d'armature (10) et la seconde pièce d'armature (30) sont fixées, respectivement, à l'un (2) desdits éléments structurels et à l'autre élément structurel (3), et sachant que la tige de poussée (14) de ladite première pièce d'armature (10) emprisonne par-derrière la contre-dépouille (33) de ladite seconde pièce d'armature (30), par son extrémité antérieure (14b), les deux éléments structurels (2, 3) se trouvant ainsi mutuellement assujettis par serrage.
